# EUROPÄISCHE PATENTSCHRIFT

(11) **EP 3 794 200 B1**
(45) Veröffentlichungstag und Bekanntmachung des Hinweises auf die Patenterteilung: **15.06.2022**
(21) Anmeldenummer: 19721319.2
(22) Anmeldetag: 08.05.2019
(51) Int. Cl.: E06B 3/66

(54) **ISOLIERVERGLASUNGSEINHEIT**
INSULATING GLAZING UNIT
UNITÉ DE VITRAGE ISOLANT

(30) Priorität: 14.05.2018 EP 18172066
(43) Veröffentlichungstag der Anmeldung: 24.03.2021
(73) Patentinhaber: Saint-Gobain Glass France, 92400 Courbevoie (FR)
(72) Erfinder: HOLTSTIEGE, Thomas, 58332 Schwelm (DE); DRÖGE, Alicia, 52066 Aachen (DE); EFFERTZ, Christian, 52080 Aachen (DE); MARJAN, Christopher, 52072 Aachen (DE)
(74) Vertreter: Weber, Sophie
(86) Internationale Anmeldenummer: PCT/EP2019/061758
(87) Internationale Veröffentlichungsnummer: WO 2019/219461

(56) Entgegenhaltungen:
- WO-A1-00/36261
- WO-A1-2007/137719
- US-A1- 2011 133 940

## Beschreibung

Die Erfindung betrifft eine Isolierverglasungseinheit, die mindestens zwei Glasscheiben und einen zwischen diesen nahe deren Kanten umlaufendes Abstandshalterprofil aufweist, zur Verwendung in einem Fenster, einer Tür oder einer Fassadenverglasung, das/die jeweils einen die Kanten der Isolierverglasung umgreifenden Rahmen aufweist, wobei an der Isolierverglasungseinheit mindestens ein RFID-Transponder als Identifikationselement angebracht ist. Sie betrifft des Weiteren ein Fenster, eine Tür und eine Fassadenverglasung, die mit einer solchen Isolierverglasungseinheit gebildet sind.

Moderne Fenster, Türen und Fassadenverglasungen, zumindest für den Einsatz in nördlichen und gemäßigten Breiten, werden üblicherweise unter Einsatz vorgefertigter Isolierverglasungseinheiten hergestellt, die den oben erwähnten Aufbau haben, gegebenenfalls aber auch mehr als zwei Glasscheiben im Verbund umfassen können. Derartige Isolierverglasungseinheiten stellen massenhaft hergestellte, versandte und auch eigenständig gehandelte Produkte dar, die auf ihrem Weg bis in ein Endprodukt und gegebenenfalls auch noch bei dessen Wartung und Instandhaltung eindeutig identifizierbar sein sollten.

Es ist bereits bekannt, Isolierverglasungseinheiten mit derartigen identifizierenden Kennzeichnungen zu versehen, und in der entsprechenden Praxis haben sich gewisse Anforderungen der Hersteller und Anwender ergeben:
[1] Die identifizierende Markierung sollte sowohl von der Innen- als auch der Außenseite her unsichtbar sein.
[2] Die Kennzeichnung sollte aus einem Abstand zwischen 30 cm und 1 m "lesbar" sein.
[3] Die Kennzeichnung sollte weitestgehend fälschungssicher sein, also nicht ohne Weiteres überschrieben oder kopiert werden können.

Die Wirksamkeit herkömmlicher identifizierender Markierungen, wie etwa Barcodes und QR-Codes, basiert auf deren Sichtbarkeit, was für Isolierverglasungseinheiten zumindest eine Einschränkung unter obigem Aspekt [1] bedeutet. Auch die Erfüllung der Anforderung [2] gestaltet sich damit schwierig.

Es wurde auch vorgeschlagen, Isolierverglasungseinheiten mit "elektronischen" Kennzeichen, insbesondere über Funk auslesbaren Identifikatoren, sogenannten RFID-Transpondern, zu versehen. Derartige Isolierverglasungseinheiten sind beispielsweise offenbart in der WO 00/36261 A1 oder der WO 2007/137719 A1.

Bestimmte Typen von Fenster- und Türrahmen, insbesondere aber Fassadenkonstruktionen, in denen Isolierverglasungseinheiten verbaut werden, bestehen vollständig oder mindestens teilweise aus einem Metall (Aluminium, Stahl ...), welches den Durchgang von Funkwellen vom oder zum RFID-Transponder an der Isolierverglasungseinheit unterbricht oder zumindest stark dämpft. Aus diesem Grund hat sich insbesondere die Erfüllung der obigen Anforderung [2] als schwierig erwiesen. Bekannte mit RFID-Transpondern versehene Isolierverglasungseinheiten sind daher nicht ohne Weiteres bei metallischen Rahmenkonstruktionen einzusetzen. Das verringert den potentiellen Einsatzbereich der so gekennzeichneten Verglasungseinheiten und somit die Akzeptanz der entsprechenden Markierungslösungen bei den Herstellern und Anwendern.

Der Erfindung liegt daher die Aufgabe zugrunde, eine verbesserte Isolierverglasungseinheit der oben genannten Art bereitzustellen, die insbesondere unproblematisch auch in Rahmenkonstruktionen einsetzbar ist, die zumindest zu einem erheblichen Teil aus einem Metall bestehen, und die auch bei solchen Einbausituationen die Erfüllung der o. g. Anforderungen gewährleistet.

Diese Aufgabe wird durch eine Isolierverglasungseinheit mit den Merkmalen des Anspruchs 1 gelöst, also dadurch, dass der oder mindestens ein Transponder auf einer Innenfläche einer der Glasscheiben im Abstandsbereich zwischen dem Abstandshalterprofil und der Kante der Glasscheibe angeordnet ist. Zweckmäßige Fortbildungen des Erfindungsgedankens sind Gegenstand der abhängigen Ansprüche.

Die Erfindung ist im Ergebnis von umfangreichen experimentellen Untersuchungen entstanden, die an Isolierverglasungseinheiten mit dem oben erwähnten grundsätzlichen Aufbau unternommen wurden, bei dem insbesondere der Abstandshalter ein mit einem Trocknungsmittel gefülltes Hohlprofil ist, das aus Metall besteht oder wenigstens abschnittsweise mit einer Metallfolie beschichtet ist, und bei dem auf der scheibenäußeren Oberfläche des Abstandhalterprofils ein (ebenfalls umlaufender) Dichtmittelstreifen aufgebracht ist. Was die Anwendungssituation anbelangt, haben die Erfinder insbesondere Untersuchungen an in metallische Rahmen eingebetteten Isolierverglasungseinheiten angestellt, bei denen auf dem Falzgrund des Rahmens Distanzstücke liegen und zwischen den Außenseiten der Glasscheiben und den Innenseiten der benachbarten aufstehenden Rahmenfalze Elastomer-Dichtstreifen angeordnet sind. Bei den Untersuchungen wurden handelsübliche RFID-Transponder eingesetzt, deren Aufbau und Funktionsweise hinlänglich bekannt ist und daher hier nicht weiter beschrieben werden muss. Die bei solchen Transpondersystemen genutzten Funkwellenlängen liegen üblicherweise im Bereich zwischen 125 kHz und 960 MHz (selten zwischen 2,45 GHz und 5,8 GHz) und durchdringen sowohl Holz als auch herkömmliche Kunststoffe, nicht aber Metalle. Die Erkenntnisse der Erfinder gelten grundsätzlich sowohl für passive als auch für aktive RFID-Transponder.

Im Hinblick auf Metallrahmen, die eine Isolierverglasungseinheit umgreifen, und die aufgrund elementarer physikalischer Gesetzmäßigkeiten und gemäß der darauf basierenden Kenntnis des Fachmanns die HF-Strahlung von randnah angebrachten RFID-Transpondern oder deren Antennen empfindlich stören, wenn nicht völlig unterbinden sollten, ist die vorgeschlagene Lösung überraschend. Sie erbringt den unvorhergesehenen Vorteil, dass ein erfindungsgemäß platzierter RFID-Transponder in einem relativ großen Abstand von 0,5-1 m von einem Fenster, einer Tür oder einer Fassadenverglasung, in die die Isolierverglasungseinheit eingebaut ist, noch problemlos und zuverlässig auslesbar ist.

In zweckmäßigen Ausführungen der Erfindung ist zumindest ein Transponder an einer Ecke der Isolierverglasungseinheit platziert. In einer Ausgestaltung ist er an einer vorbestimmten Ecke angeordnet, die aufgrund einer vorbestimmten Einbaulage der Isolierverglasungseinheit in dem Rahmen festgelegt ist. Diese Ausführung ermöglicht es, eine eingebaute Isolierverglasungseinheit schnell zu identifizieren, ohne sämtliche Ecken daraufhin absuchen zu müssen, ob der die Identifikation liefernde Transporter dort oder anderswo platziert ist.

In einer weiteren Ausführung ist vorgesehen, dass an jeder Ecke der Isolierverglasungseinheit ein Transponder angeordnet ist. Diese Ausführung ist in der Herstellung etwas aufwändiger als die vorgenannte, ermöglicht dafür eine schnelle Identifikation jeder entsprechend ausgestatteten Isolierverglasungseinheit unabhängig davon, ob Festlegungen zu einer vorgeschriebenen Einbaulage getroffen wurden und diese auch tatsächlich eingehalten werden.

In einer weiteren Ausführung ist der RFID-Transponder elektromagnetisch oder elektrisch mit einem leitfähig ausgebildeten Abstandshalterprofil oder einem leitfähigen Abschnitt eines solchen gekoppelt oder verbunden, derart, dass dieses/dieser als Antenne des Transponders wirkt.

Vorteile und Zweckmäßigkeiten der Erfindung ergeben sich im Übrigen aus der nachfolgenden Beschreibung von Ausführungsbeispielen anhand der Figuren. Von diesen zeigen:
- Fig. 1: eine Detailansicht (Querschnittsdarstellung) eines Kantenbereiches eines Fensters, in dem eine Isolierverglasungseinheit mit Transpondern verbaut ist,
- Fig. 2A: eine Detailansicht (Querschnittsdarstellung) eines Kantenbereiches eines Fensters, in dem eine Isolierverglasungseinheit gemäß einer Ausführungsform der Erfindung verbaut ist,
- Fig. 2B: eine Detailansicht (Querschnittsdarstellung) eines Kantenbereiches eines Fensters, in dem eine Isolierverglasungseinheit gemäß einer weiteren Ausführungsform der Erfindung verbaut ist,
- Fig. 3: eine Detailansicht (Querschnittsdarstellung) eines Kantenbereiches eines Fensters, in dem eine Isolierverglasungseinheit mit einem Transponder verbaut ist, und
- Fig. 4: eine schematische Darstellung (Draufsicht) eines Abschnitts einer Fassadenverglasung, in der eine erfindungsgemäße Isolierverglasungseinheit eingebaut ist.

In den Figuren sowie der nachfolgenden Beschreibung sind die Isolierverglasungseinheiten wie auch das Fenster sowie die einzelnen Komponenten jeweils, unabhängig davon, dass sich die konkreten Ausführungen unterscheiden, mit den gleichen Bezugsziffern bezeichnet.

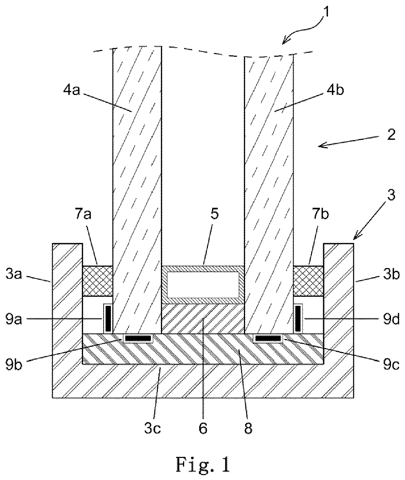

Fig. 1 zeigt einen Kantenbereich einer Isolierverglasungseinheit 1, eingesetzt in einen die Stirnseite der Isolierverglasungseinheit umgreifenden, im Querschnitt im Wesentlichen U-förmigen Metallrahmen 3 als Teile eines Isolierfensters 2.

Die Isolierverglasungseinheit 1 umfasst bei dieser Ausführung zwei Glasscheiben 4a und 4b, die durch ein nahe der Stirnfläche zwischen die Glasscheiben gesetztes Abstandshalterprofil 5 in einem vorbestimmten Abstand gehalten sind. Das Abstandshalterprofil 5 ist üblicherweise hohl und mit einem (nicht gezeigten) Trocknungsmittel befüllt, welches über innenseitige kleine Öffnungen (ebenfalls nicht gezeigt) etwaige in den Glaszwischenraum eingedrungene Feuchtigkeit an sich bindet. Der Glaszwischenraum zwischen den Glasscheiben 4a und 4b ist evakuiert oder mit einem Edelgas, etwa Argon, gefüllt. Im Randbereich der Isolierverglasungseinheit 1, zwischen den Glasschreiben 4a und 4b und außerhalb des Abstandshalterprofils 5, ist eine Elastomer-Versiegelung (Dichtprofil) 6 eingebracht. Diese ist hier vereinfacht einteilig dargestellt. In der Praxis umfasst sie üblicherweise zwei Komponenten von denen eine zwischen Abstandshalter und Glas abdichtet und die andere auch die Isolierverglasungseinheit zusätzlich stabilisiert.

Bei der in Fig. 1 gezeigten Ausführung ist auch der jeweilige Zwischenraum zwischen den beiden aufstehenden Falzwänden 3a, 3b des Rahmens 3 und der benachbarten Glasscheibe 4a bzw. 4b mit einem Elastomerprofil 7a bzw. 7b versiegelt. Im Falzgrund 3c des Rahmens 3 liegen an vorgegebenen Stellen der Längserstreckung des Rahmens Distanzstücke 8, die im Wesentlichen über die ganze Breite des Falzgrundes 3c reichen und somit die Stirnfläche der Isolierverglasungseinheit 1 vollständig punktuell abstützen. Derartige Distanzstücke sind üblicherweise aus einem zwar festen, aber nicht spröden bis zu einem gewissen Grade auch punktuell nachgiebigen Kunststoff gefertigt.

Die Isolierverglasungseinheit 1 nach Fig. 1 ist beispielhaft mit insgesamt vier RFID-Transpondern 9a bis 9d versehen. Hiervon sind die Transponder 9a und 9d an der Begrenzungskante der Glasscheibe 4a bzw. 4b jeweils auf deren äußerer Oberfläche aufgebracht, während die Transponder 9b und 9c auf die Stirnkante der Glasscheiben 4a bzw. 4b aufgebracht sind. Diese beispielhafte Anordnung dient zur Verdeutlichung der Anbringungsmöglichkeiten der Transponder bei einer Isolierverglasungseinheit gemäß einer ersten Ausführungsform der Erfindung; in der Praxis werden normalerweise nur eine oder zwei der hier aufgezeigten möglichen Anbringungspositionen belegt sein. Bei Anbringung auf der Scheibenoberfläche kann der oder jeder Transponder auch etwas Abstand von der Kante haben.

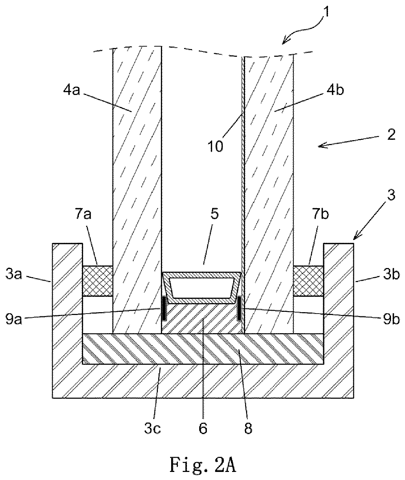

Fig. 2A zeigt eine abgewandelte Konstruktion, bei der die Glasscheibe 4b eine innenseitige Beschichtung (etwa Wärmeschutzbeschichtung) 10 hat.

Bei dieser Ausführung sind zwei Transponder 9a, 9b gezeigt, die jeweils auf den innenseitigen Oberflächen der Glasscheiben 4a bzw. 4b aufgebracht sind, und zwar im Grenzbereich zwischen dem Abstandshalterprofil 5 und dem die Isolierverglasungseinheit versiegelnden Dichtprofil 6. Da das Abstandshalterprofil 5 bei dieser Ausführung im Querschnitt trapezförmig, also zur Stirnkante der Isolierverglasungseinheit hin etwas verjüngt ist, ist dort ein kleiner Spalt zur benachbarten Glasoberfläche vorhanden, in den sich handelsübliche Transponder teilweise einschieben lassen. Auch hier wird in der Praxis normalerweise nur eine der beiden Anbringungspositionen mit einem Transponder belegt sein.

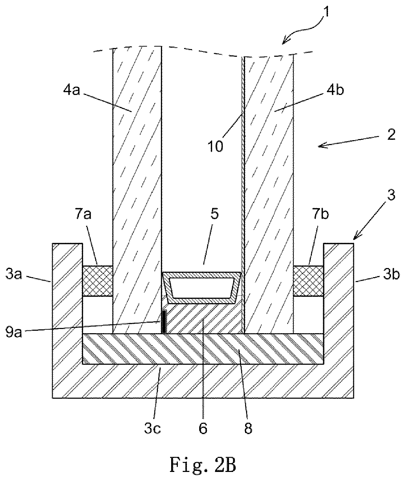

Fig. 2B zeigt eine weitere abgewandelte Konstruktion, bei der die Glasscheibe 4b eine innenseitige Beschichtung 10 aufweist, die das Glas ganz oder nur teilweise bedecken kann.

Bei dieser Ausführung ist lediglich ein Transponder 9a dargestellt. Der Transponder 9a ist auf der innenseitigen Oberflächen der Glasscheiben 4a angeordnet und zwar zwischen dem die Isolierverglasungseinheit versiegelnden Dichtprofil 6 und der Glasscheibe 4a. Dabei hat der Transponder 9a keinen Berührungskontakt zum Abstandshalterprofil 5 und weist vorzugsweise einen Abstand von 0,1 - 2mm zum Abstandshalterprofil auf. Die verstärkende Wirkung der Signalstärke hängt vom Abstand des Transponders zum Abstandshalter ab.

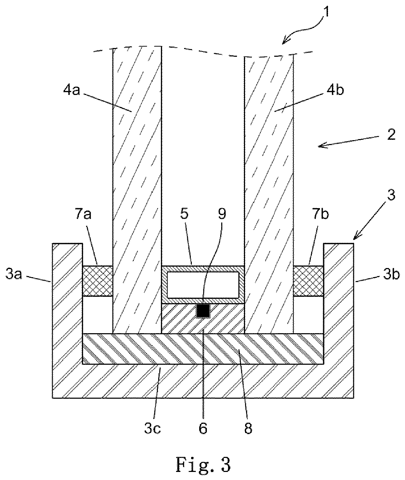

Fig. 3 zeigt eine Abwandlung des in Fig. 2 dargestellten und oben beschriebenen Fensteraufbaus, deren einziger Unterschied im Vorsehen eines einzelnen RFID-Transponders 9 und dessen Positionierung mittig zwischen den Glasscheiben 4a und 4b an der äußeren Oberfläche des Abstandshalterprofils 5, eingebettet in die benachbarte Oberfläche des Dichtprofils 6, ist.

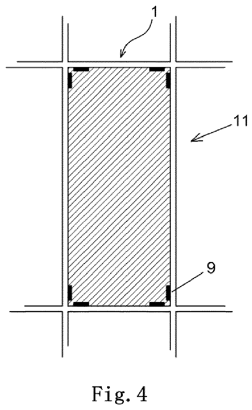

Fig. 4 zeigt schematisch, am Beispiel einer Fassadenverglasung 10, die Anbringung von Transpondern 9 in den Eckbereichen einer Isolierverglasungseinheit 1. Es hat sich bei Untersuchungen der Erfinder gezeigt, dass eine solche Anordnung die Empfangs-/Sendecharakteristik positiv beeinflusst und die erzielbare Auslesedistanz der Transponder vergrößert. Wie in der Figur gezeigt ist, können Transponder mit einem langgestreckten Gehäuse in Eckennähe sowohl an den langen als auch den kurzen Seiten der Isolierverglasungseinheit angebracht sein, und zwar grundsätzlich auf jede der in den Figuren 1 bis 3 gezeigten und oben beschriebenen Arten.

Die Ausführung der Erfindung ist nicht auf die oben beschriebenen Beispiele und hervorgehobenen Ausführungsaspekte beschränkt, sondern auch in einer Vielzahl von Abwandlungen möglich, die sich für den Fachmann aus den anhängenden Ansprüchen ergeben.

### Bezugszeichenliste

- 1: Isolierverglasungseinheit
- 2: Fenster
- 3: Rahmen
- 3a, 3b: aufstehende Falzwände
- 3c: Falzgrund
- 4a, 4b: Glasscheiben
- 5: Abstandshalterprofil
- 6: Dichtprofil der Isolierverglasungseinheit
- 7a, 7b: Elastomerprofil am Rahmen
- 8: Distanzstück
- 9, 9a-9d: RFID-Transponder
- 10: Fassadenverglasung

## Patentansprüche

1. Isolierverglasungseinheit (1), die mindestens zwei Glasscheiben (4a, 4b) und ein zwischen diesen nahe deren Kanten umlaufendes Abstandshalterprofil (5) aufweist, zur Verwendung in einem Fenster (2), einer Tür oder einer Fassadenverglasung (10), die jeweils einen die Kanten der Isolierverglasung umgreifenden, insbesondere metallischen, Rahmen (3) aufweist,
wobei an der Isolierverglasungseinheit mindestens ein RFID-Transponder (9, 9a-9d) als Identifikationselement angebracht ist,
**dadurch gekennzeichnet, dass**
der oder mindestens ein Transponder auf einer Innenfläche einer der Glasscheiben im Abstandsbereich zwischen dem Abstandshalterprofil und der Kante der Glasscheibe angeordnet ist.

2. Isolierverglasungseinheit nach Anspruch 1, wobei der oder mindestens ein Transponder (9, 9a-9d) an einer Ecke der Isolierverglasungseinheit (1) angeordnet ist.

3. Isolierverglasungseinheit nach Anspruch 2, wobei der Transponder (9, 9a-9d) an einer vorbestimmten Ecke angeordnet ist, die aufgrund einer vorbestimmten Einbaulage der Isolierverglasungseinheit (1) in dem Rahmen (3) festgelegt ist.

4. Isolierverglasungseinheit nach Anspruch 2, wobei an jeder Ecke der Isolierverglasungseinheit (1) ein Transponder (9, 9a-9d) angeordnet ist.

5. Isolierverglasung nach einem der vorangehenden Ansprüche, wobei ein Transponder (9a, 9b) elektrisch mit einem leitfähig ausgebildeten Abstandshalterprofil (5) oder einem leitfähigen Abschnitt eines solchen verbunden ist, derart, dass dieses/dieser als Antenne des Transponders wirkt.

6. Fenster (2) mit einem Rahmen (3) und einer in den Rahmen eingesetzten Isolierverglasungseinheit (1) nach einem der Ansprüche 1 bis 5.

7. Tür mit einem Rahmen und einer in den Rahmen eingesetzten Isolierverglasungseinheit nach einem der Ansprüche 1 bis 5.

8. Fassadenverglasung (10) mit einer Konstruktion, die einen Rahmen und eine in den Rahmen eingesetzte Isolierverglasungseinheit (1) nach einem der Ansprüche 1 bis 5 aufweist.

## Claims

1. Insulating glazing unit (1) that has at least two glass panes (4a, 4b) and a circumferential spacer profile (5) between them near their edges, for use in a window (2), a door, or a façade glazing (10), which has in each case a frame (3), in particular a metallic frame, surrounding the edges of the insulating glazing,
wherein at least one RFID transponder (9, 9a-9d) is attached to the insulating glazing unit as an identification element,
**characterised in that**
the or at least one transponder is arranged on an inner surface of one of the glass panes in the spaced region between the spacer profile and the edge of the glass pane.

2. Insulating glazing unit according to claim 1, wherein the or at least one transponder (9, 9a-9d) is arranged at a corner of the insulating glazing unit (1).

3. Insulating glazing unit according to claim 2, wherein the transponder (9, 9a-9d) is arranged at a predetermined corner, which is specified based on a predetermined installation position of the insulating glazing unit (1) in the frame (3).

4. Insulating glazing unit according to claim 2, wherein a transponder (9, 9a-9d) is arranged at each corner of the insulating glazing unit (1).

5. Insulating glazing unit according to one of the preceding claims, wherein a transponder (9a, 9b) is electrically connected to a conductive spacer profile (5) or to a conductive section of such a profile such that the profile/section of the profile acts as an antenna of the transponder.

6. Window (2) with a frame (3) and an insulating glazing unit (1) according to one of claims 1 through 5 inserted into the frame (3).

7. Door with a frame and an insulating glazing unit according to one of claims 1 through 5 inserted into the frame.

8. Façade glazing (10) with a design that has a frame and an insulating glazing unit (1) according to one of claims 1 through 5 inserted into the frame.

## Revendications

1. - Ensemble vitrage isolant (1), qui présente au moins deux plaques de verre (4a, 4b) et un profilé espaceur périphérique (5) entre celles-ci près de leurs bords, pour l'utilisation dans une fenêtre (2), une porte ou un vitrage de façade (10), qui présente chacun (e) un cadre (3), en particulier métallique, entourant les bords du vitrage isolant, au moins un transpondeur RFID (9, 9a- 9d) étant appliqué sur l'ensemble vitrage isolant en tant qu'élément d'identification,
**caractérisé par le fait que**
le ou au moins un transpondeur est disposé sur une surface interne de l'une des plaques de verre dans la partie d'espacement entre le profilé espaceur et le bord de la plaque de verre.

2. - Ensemble vitrage isolant selon la revendication 1, dans lequel le ou au moins un transpondeur (9, 9a-9d) est disposé à un coin de l'ensemble vitrage isolant (1).

3. - Ensemble vitrage isolant selon la revendication 2, dans lequel le transpondeur (9, 9a-9d) est disposé à un coin prédéterminé, qui est spécifié sur la base d'une position d'installation prédéterminée de l'ensemble vitrage isolant (1) dans le cadre (3).

4. - Ensemble vitrage isolant selon la revendication 2, dans lequel, à chaque coin de l'unité de vitrage isolant (1) est disposé un transpondeur (9, 9a-9d).

5. - Vitrage isolant selon l'une des revendications précédentes, dans lequel un transpondeur (9a, 9b) est connecté électriquement à un profilé espaceur (5) conçu pour être conducteur ou à une section conductrice de celui-ci, de telle sorte que celui-ci/celle-ci agit comme une antenne du transpondeur.

6. - Fenêtre (2) ayant un cadre (3) et un ensemble vitrage isolant (1) selon l'une quelconque des revendications 1 à 5 mis en place dans le cadre.

7. - Porte ayant un cadre et un ensemble vitrage isolant selon l'une des revendications 1 à 5 mis en place dans le cadre.

8. - Vitrage de façade (10) ayant une structure qui présente un cadre et un ensemble vitrage isolant (1) selon l'une des revendications 1 à 5 mis en place dans le cadre.
